# EUROPÄISCHE PATENTANMELDUNG

(11) **EP 2 404 714 A1**
(43) Veröffentlichungstag der Anmeldung: **11.01.2012**
(21) Anmeldenummer: 11165473.7
(22) Anmeldetag: 10.05.2011
(51) Int. Cl.: B25J 19/06

(54) **Formvariables, rekonfigurierbares Strukturelement mit schaltbarer Steifigkeit und Roboterarm mit einem solchen Strukturelement**

(30) Priorität: 18.05.2010 DE 102010029088
(71) Anmelder: Deutsches Zentrum für Luft- und Raumfahrt e.V., 51147 Köln (DE)
(72) Erfinder: Opitz, Steffen, 38104 Braunschweig (DE); Keimer, Ralf, 38124 Braunschweig (DE); Sinapius, Professor Dr. Michael, 37085 Göttingen (DE); Rose, Dr. Michael, 38165 Lehre (DE)
(74) Vertreter: Rehberg Hüppe + Partner

(57) **Zusammenfassung**

Bei einem Strukturelement (1) mit zwei mechanischen Schnittstellen (2, 3) und einer formvariablen Verbindung zwischen den beiden Schnittstellen (2, 3) weist diese Verbindung eine Vielzahl von Teilchen (5) in einem Raum (6) auf, der zumindest teilweise von einer verformbaren Hülle (4) begrenzt wird, wobei die Teilchen (5) über die Hülle (4) derart mit einer Kraft (7) gegeneinander beaufschlagbar sind, dass eine Relativanordnung der Teilchen (5) zueinander durch Kraft- und/oder Formschluss zwischen den Teilchen (5) und damit eine Relativanordnung der beiden Schnittstellen (2, 3) konserviert wird, während die Relativanordnung der Teilchen (5) und damit die Relativanordnung der beiden Schnittstellen (2, 3) ohne die Kraft (7) veränderbar ist.

## Beschreibung

### TECHNISCHES GEBIET DER ERFINDUNG

Die Erfindung bezieht sich auf ein Strukturelement mit zwei mechanischen Schnittstellen und mit einer formvariablen Verbindung zwischen den beiden Schnittstellen sowie auf einen Roboterarm mit einem solchen Strukturelement.

Lasttragende Strukturelemente, wie zum Beispiel Glieder eines Roboterarms oder Werkstückaufnahmen in Werkzeugmaschinen, haben in aller Regel eine feste Form. Hieraus ergeben sich Einschränkungen bezüglich des Einsatzbereichs dieser Strukturen. Roboterarme werden zudem im Allgemeinen sehr steif ausgelegt, um Anforderungen an Positioniergenauigkeit und Geschwindigkeit zu befriedigen. Im Fall einer Kollision mit Menschen sind schwere Verletzungen die Folge. Daher ist bislang eine strikte Trennung der Arbeitsräume von Mensch und Roboter zwingend erforderlich.

### STAND DER TECHNIK

Zu den bekannten Strukturelementen mit zwei mechanischen Schnittstellen und mit einer formvariablen Verbindung zwischen den beiden Schnittstellen zählen durch Verspannung von Gelenkteilen blockierbare Gelenke und sogenannte Aktuatoren, deren Schnittstellen durch aktiv ansteuerbare Materialien, wie beispielsweise Piezokristalle, gegeneinander ausrichtbar sind. In beiden Fällen sind die bekannten Strukturelemente vergleichsweise schwer und aufwändig.

Aus der DE 198 43 739 A1 ist ein stoffschlüssiges Gelenk bekannt, das aktiv angesteuert werden kann und ohne pneumatische oder hydraulische Antriebe einsetzbar ist. Dazu besteht ein schlauchartiger Grundkörper aus einem Polymer, und entlang der Wand des Grundkörpers ist mindestens ein SMA-Draht angebracht. Der schlauchartige Grundkörper ist mit einem Gel oder Gas gefüllt. Das polymere Material des Grundkörpers kann ausschließlich in Längsrichtung elastisch sein. Durch thermische Wirkung eines durch die SMA-Drähte fließenden Stroms verkürzen sich diese. So wird eine Biegung des Gelenkelements eingeleitet.

Aus der DE 44 26 811 C1 ist ein steuerbarer flexibler Aktor in Form einer Schraubenfeder bekannt. Die Schraubenfeder weist ein S-förmiges Querschnittsprofil auf und ist so ausgebildet, dass der jeweils untere Rand den jeweils oberen Rand einer benachbarten Federwindung überlappt. Durch Zugseile, die entlang Ösen an dieser Feder geführt sind, kann diese gekrümmt und gestaucht werden, und durch vorzugsweise vorgesehene weitere Zugseile, die in Schlaufen um die sich überlappenden Ränder geführt werden, kann die Feder wieder gestreckt werden. Zusätzlich sind im Bereich der Überlappung Blockademittel in Form von Stellgliedern vorgesehen, mit denen es möglich ist, benachbarte Federwindungen gezielt zu blockieren. Dem Aktor kann durch Anwendung von Zug und fallweise Druck in Verbindung mit den Blockademitteln eine nahezu beliebige Form verliehen werden.

Aus dem Bereich des Krankentransports sind sogenannte Vakuummatratzen bekannt, die ein Granulat, beispielsweise aus einem Hartschaum, innerhalb eines von einer verformbaren Hülle umschlossenen Raums aufweisen. Durch Evakuieren dieses Raums wirkt auf das Granulat der Umgebungsdruck über die Hülle ein und fixiert die einzelnen Teilchen des Granulats durch Kraft- und oder Formschluss aneinander. Auf diese Weise wird eine Relativanordnung der Teilchen und damit eine äußere Form der Vakuummatratze konserviert. Dies wird genutzt, um Patienten, beispielsweise mit Wirbelsäulenverletzungen, für den Transport zu immobilisieren, indem sie vor dem Evakuieren des Raums mit dem Granulat auf die Vakuummatratze gelegt und das Granulat an sie angeformt wird. Wenn dann der Raum evakuiert wird, steift sich die zuvor einfach verformbare Vakuummatratze aus. Eine solche Vakuummatratze ist beispielsweise in der EP 1 166 740 A2 beschrieben.

### AUFGABE DER ERFINDUNG

Der Erfindung liegt die Aufgabe zugrunde, ein Strukturelement insbesondere zum Einsatz bei Robotern aufzuzeigen, das einen vergrößerten Einsatzbereich und das Potential zur Reduzierung der Verletzungsgefahr im Falle einer Kollision mit dem Menschen aufweist.

### LÖSUNG

Die Aufgabe der Erfindung wird durch ein Strukturelement mit den Merkmalen des unabhängigen Patentanspruchs 1 gelöst. Bevorzugte Ausführungsformen des erfindungsgemäßen Strukturelements sind in den abhängigen Patentansprüchen 2 bis 14 beschrieben. Patentanspruch 15 ist auf einen Roboterarm mit einem erfindungsgemäßen Strukturelement gerichtet.

### BESCHREIBUNG DER ERFINDUNG

Bei dem erfindungsgemäßen Strukturelement weist die Verbindung zwischen den beiden Schnittstellen eine Vielzahl von Teilchen in einem Raum auf, der zumindest teilweise von einer verformbaren Hülle begrenzt wird, wobei die Teilchen über die Hülle derart mit einer Kraft gegeneinander beaufschlagbar sind, dass eine Relativanordnung der Teilchen zueinander durch Kraft- und/oder Formschluss zwischen den Teilchen und damit eine Relativanordnung der beiden Schnittstellen konserviert wird, während die Relativanordnung der Teilchen und damit eine Relativanordnung der beiden Schnittstellen ohne diese Kraft veränderbar ist. Die vorliegende Erfindung nutzt daher das von den Vakuummatratzen bekannte Grundkonzept zur Ausbildung eines Strukturelements, insbesondere zur Ausbildung von Roboterarmen, aus.

Dabei können die beiden Schnittstellen ausschließlich durch die verformbare Hülle und während der Einwirkung der Kraft durch die Teilchen mechanisch miteinander verbunden sein. Das heißt, ohne die Kraft hängen die beiden Schnittstellen nur über die Hülle aneinander, in der die Teilchen als lockeres Schüttgut vorliegen.

Es ist aber auch möglich, dass die beiden Schnittstellen parallel zu der Hülle und den Teilchen durch ein verformbares Stützskelett oder ein bewegliches Stützgelenk miteinander verbunden sind. Dieses Stützskelett bzw. Stützgelenk kann zum Beispiel die Freiheitsgrade der Relativbewegung der beiden Schnittstellen, wenn die Kraft nicht wirkt, gezielt einschränken. Das Stützskelett bzw. Stützgelenk muss dafür aber nicht massiv ausgebildet sein, weil es die im Betrieb zwischen den Schnittstellen des Strukturelements wirkenden Lasten zumindest nicht allein aufnehmen muss. Das Stützskelett oder Stützgelenk kann auch aktiv ansteuerbar sein, um eine bestimmte Relativausrichtung der beiden Schnittstellen des Strukturelements einstellen zu können, wenn die Kraft auf die Teilchen nicht einwirkt.

Das Stützskelett oder Stützgelenk kann sich insbesondere durch den Raum mit den Teilchen erstrecken, das heißt von der Hülle der Verbindung zwischen den Schnittstellen umschlossen sein. Es wird damit im Falle des Einwirkens der Kraft auch unmittelbar durch die Teilchen blockiert.

Der Querschnitt des Raums sollte sich überall zwischen den beiden Schnittstellen in allen seinen Richtungen über mehrere Teilchen erstrecken. Auch die Schnittstellen sollten sich jeweils an einer flächigen Anordnung von mehreren Teilchen abstützen.

In einer konkreten Ausführungsform ist der Raum, in dem die Teilchen angeordnet sind, entsprechend dem Prinzip einer Vakuummatratze evakuierbar, um die Kraft auf die Teilchen über die Hülle durch den Umgebungsdruck aufzubringen.

Für den Druck in dem Raum, in dem die Teilchen angeordnet sind, kann eine Begrenzungsoder Regelungseinrichtung vorgesehen sein, die ein Ausweichen bzw. eine Deformation des Strukturelements im Falle einer Kollision ermöglicht, indem sie beispielsweise den evakuierten Raum belüftet.

Die Hülle des neuen Strukturelements kann elastisch verformbar sein.

Wenn die Hülle eine hohe Dehnsteifigkeit insbesondere in Umfangsrichtung aufweist, kann diese elastische Verformbarkeit auch dazu genutzt werden, um einen Teil der oder sogar die gesamte die Kraft zur Fixierung der Teilchen aufzubringen. Die Gesamtheit der Teilchen weist dann ein größeres Schüttvolumen als der Raum innerhalb der entspannten Hülle auf. In diesem Fall ist der Raum, in dem die Teilchen angeordnet sind, vorzugsweise expandierbar, um die über die Hülle auf die Teilchen einwirkende Kraft zum Verformen des Strukturelements aufzuheben, wozu beispielsweise Druckluft in den Raum eingepresst werden kann. Aber auch dann, wenn die Kraft auf die Teilchen durch ein Vakuum in dem Raum mittels des Umgebungsdrucks aufgebracht wird, kann die Hülle elastisch verformbar sein. Sie kann in diesem Fall aber auch dehnstarr sein.

Es ist auch möglich, aktiv ansteuerbare Komponenten in der Hülle vorzusehen, um damit die Kraft auf die Teilchen in dem von der Hülle umschlossenen Raum aufzubringen oder um die Schnittstellen im kraftlosen Zustand mit Hilfe einer Aktuatorik innerhalb der Hülle gegeneinander auszurichten.

Die Teilchen des neuen Strukturelements sind vorzugsweise druckfest und weisen eine hohe Drucksteifigkeit auf. Sie können aber beispielsweise auch einen druckfesten Kern innerhalb einer elastisch verformbaren Hülle aufweisen. Die Oberflächen der Teilchen sind zum Erreichen eines hohen Haftreibungswiderstands aneinander vorzugsweise rau und/oder zur Erhöhung ihrer Haftreibung behandelt.

Zwischen den beiden Schnittstellen des erfindungsgemäßen Strukturelements können auch zwei oder mehr gegeneinander abgegrenzte Räume mit Teilchen in Reihen- und/oder Parallelschaltung vorgesehen sein. Dabei können im Falle einer Kollision eines derartigen Strukturelements mit dem Menschen gezielt einzelne Kammern drucklos geschaltet oder belüftet werden, um die Steifigkeit des Strukturelements herabzusetzen.

Das erfindungsgemäße Strukturelement ist insbesondere zur Ausbildung eines Roboterarms geeignet, der sehr schnell an unterschiedliche Arbeitsräume anpassbar ist. So kann beispielsweise der Roboterarm gekrümmt werden, um hinter Hindernisse greifen zu können. Das neue Strukturelement erlaubt es, neben dem Winkel und dem seitlichen Versatz auch den Abstand zwischen den beiden mechanischen Schnittstellen zu variieren.

### KURZBESCHREIBUNG DER FIGUREN

Die Erfindung wird im Folgenden anhand von Ausführungsbeispielen unter Bezugnahme auf die beigefügten Zeichnungen näher erläutert und beschrieben.
- **Fig. 1**: skizziert das neue Strukturelement ohne auf seine Teilchen einwirkende Kraft.
- **Fig. 2**: skizziert das Strukturelement gemäß Fig. 1 in einer Relativanordnung seiner Schnittstellen bei auf seine Teilchen wirkender Kraft.
- **Fig. 3**: skizziert das Strukturelement gemäß Fig. 1 und 2 in einer anderen Relativstellung seiner Schnittstellen bei auf seine Teilchen einwirkender Kraft.
- **Fig. 4**: skizziert eine zweite Ausführungsform des Strukturelements mit parallel zu den Teilchen angeordnetem Stützskelett zwischen den Schnittstellen.
- **Fig. 5**: skizziert das Strukturelement gemäß den Fig. 1 bis 3 in einer weiteren Relativstellung seiner Schnittstellen bei auf seine Teilchen wirkender Kraft; und
- **Fig. 6**: skizziert dieselbe Relativstellung von Schnittstellen eines Strukturelement wie in Fig. 5, aber bei einer modifizierten Ausführungsform des Strukturelements mit dehnstarrer und entsprechend Falten werfender Hülle um die Teilchen.

### FIGURENBESCHREIBUNG

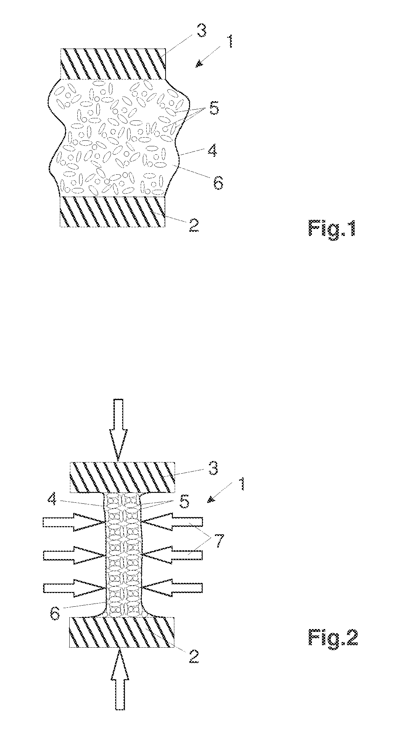

Das in den **Fig. 1 und 2** skizzierte Strukturelement 1 weist zwei hier nur sehr schematisch dargestellte Schnittstellen 2 und 3 auf. In der in Fig. 1 dargestellten Betriebsstellung des Strukturelements 1 sind die beiden Schnittstellen 2 und 3 nur durch eine Hülle 4 miteinander verbunden, die eine Vielzahl von Teilchen 5 schlauchförmig umschließt. Dabei ist ein Raum 6 innerhalb der Hülle 4, der die Teilchen 5 aufnimmt und der neben der Hülle 4 durch die Schnittstellen 2 und 3 begrenzt wird, bis auf eine hier nicht dargestellte Evakuierungsöffnung luftdicht geschlossen.

Fig. 2 zeigt das Strukturelement 1 nach der Evakuierung des Raums 6. Durch das Vakuum in dem Raum 6 wirkt über die Hülle 4 und die Schnittstellen 2 und 3 der durch Pfeile angedeutete Umgebungsdruck 7 auf die Teilchen 5 ein. Die resultierende Kraft auf die Teilchen 5 fixiert die Teilchen 5 durch Kraft- und/oder Formschluss aneinander und an den Schnittstellen 2 und 3. Hierdurch wird die Relativlage der Schnittstellen 2 und 3 konserviert und eine Verformungssteifigkeit des Strukturelements 1 zwischen den Schnittstellen 2 und 3 realisiert.

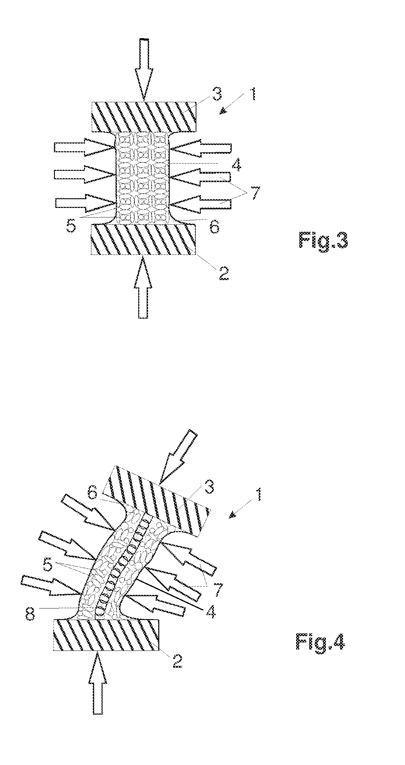

Bezüglich der konservierbaren Relativanordnung der Schnittstellen 2 und 3 ist das Strukturelement 1 flexibel. **Fig. 3** zeigt beispielsweise eine zwar ebenfalls parallele und versatzfreie Anordnung der Schnittstellen 2 und 3, aber in einem geringeren Abstand als in Fig. 2, die ebenfalls durch Evakuieren des Raums 6 und entsprechendes Einwirken des Umgebungsdrucks 7 über die Hülle 4 als Kraft auf die Teilchen 5 konserviert ist.

**Fig. 4** zeigt als weiteren Bestandteil des Strukturelements 1 ein sich zwischen den Schnittstellen 2 und 3 erstreckendes Stützskelett 8. Dieses Stützskelett 8 kann genutzt werden, um im last- und kraftfreien Zustand die Freiheitsgrade der Relativbewegung der Schnittstellen 2 und 3 zueinander einzugrenzen. Dabei ist mit dem last- und kraftfreien Zustand ein Zustand gemeint, in dem weder externe Kräfte zwischen den Schnittstellen 2 und 3 wirken, noch durch Evakuieren des Raums 6 der Umgebungsdruck 7 über die Hülle 4 auf die Teilchen 5 einwirkt und diese dadurch aneinander fixiert. Gemäß Fig. 4 verläuft das Stützskelett 8 innerhalb der Hülle 4 und ist von den Teilchen 5 umgeben. Es wird so unmittelbar beim Evakuieren des Raums 6 durch die angedrückten Teilchen 5 fixiert. In Fig. 4 ist eine stochastische Anordnung der Teilchen 5 ersichtlich, die tatsächlich auch in den Fig. 2 und 3 vorliegt, selbst wenn die dortigen Zeichnungen eine regelmäßige Anordnung der Teilchen 5 innerhalb der Hülle 4 suggerieren.

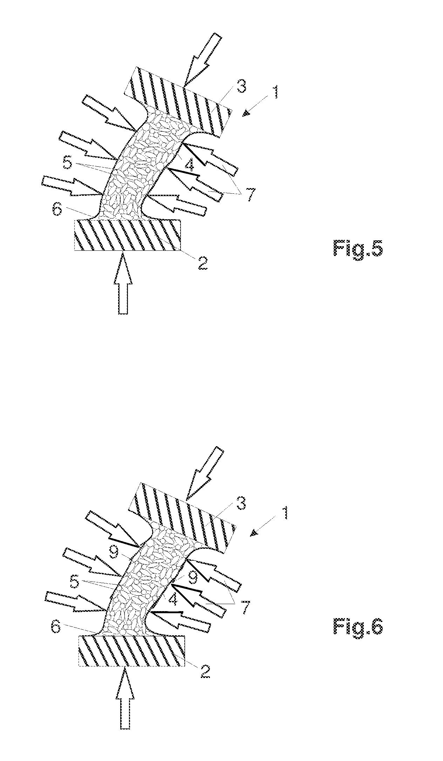

Fig. 5 zeigt eine Relativanordnung der Schnittstellen 2 und 3 wie in Fig. 4. Hier ist aber kein Stützskelett vorgesehen, sondern der Aufbau des Strukturelements 1 entspricht den Fig. 1 bis 3. **Fig. 5** deutet den Fall an, dass die Hülle 4 elastisch ist und sich daher an die Kontur der außen liegenden Teilchen 5 unter Einwirkung des Umgebungsdrucks 7 anformt.

Demgegenüber deutet **Fig. 6** den Fall einer dehnstarren Hülle 4 an, die Falten 9 wirft.

Wenn ein Strukturelement 1 gemäß einer der Fig. 1 bis 6 als Arm eines Roboters eingesetzt wird, kann dieser Arm vor dem Evakuieren des Raums 6 in sehr weiten Grenzen verformt und an eine bestimmte Aufgabe angepasst werden. Im Falle einer Kollision dieses Roboterarms mit einer empfindlichen Struktur oder einem Menschen kann die Steifigkeit des Roboterarms sehr schnell herabgesetzt werden, indem der Raum 6 im Extremfall mit Verbrennungsgasen belüftet wird. Im Fall des Strukturelements 1 gemäß Fig. 4 kann dabei die Grundform des Strukturelements 1 durch das Stützskelett 8 gehalten werden, aber mit deutlich reduzierter Steifigkeit. Eine derartige geschaltete oder gestufte Steifigkeit kann auch mit einer Begrenzung oder gezielten Herabsetzung des Unterdrucks in dem Raum 6 oder durch mehrere parallel oder hintereinander angeordnete Räume 6, die jeweils mit Teilchen 5 gefüllt sind, erreicht werden. Dabei können die Teilchen 5 in einzelnen Räumen auch unterschiedliche mechanische Eigenschaften aufweisen, die die Steifigkeit des Strukturelements 1 beeinflussen. Sehr druckfeste und drucksteife Teilchen ergeben ein sehr steifes Strukturelement 1. Elastisch verformbare Teilchen 5 in Verbindung mit einer elastischen Hülle 4 stellen dem Strukturelement 1 eine definierte Elastizität bereit.

### BEZUGSZEICHENLISTE

- 1: Strukturelement
- 2: Schnittstelle
- 3: Schnittstelle
- 4: Hülle
- 5: Teilchen
- 6: Raum
- 7: Umgebungsdruck
- 8: Stützskelett
- 9: Falte

## Patentansprüche

1. Strukturelement (1) mit zwei mechanischen Schnittstellen (2, 3) und mit einer formvariablen Verbindung zwischen den beiden Schnittstellen (2, 3), **dadurch gekennzeichnet, dass** die Verbindung eine Vielzahl von Teilchen (5) in einem Raum (6) aufweist, der zumindest teilweise von einer verformbaren Hülle (4) begrenzt wird, wobei die Teilchen (5) über die Hülle (4) derart mit einer Kraft gegeneinander beaufschlagbar sind, dass eine Relativanordnung der Teilchen (5) zueinander durch Kraftschluss und/oder Formschluss zwischen den Teilchen (5) und damit eine Relativanordnung der beiden Schnittstellen (2, 3) konserviert wird, während die Relativanordnung der Teilchen (5) und damit die Relativanordnung der beiden Schnittstellen (2, 3) ohne die Kraft veränderbar ist.

2. Strukturelement (1) nach Anspruch 1, **dadurch gekennzeichnet, dass** die beiden Schnittstellen (2, 3) nur durch die Hülle (4) und die Teilchen (5) mechanisch miteinander verbunden sind.

3. Strukturelement (1) nach Anspruch 1, **dadurch gekennzeichnet, dass** die beiden Schnittstellen (2, 3) parallel zu der Hülle (4) und den Teilchen (5) durch ein verformbares Stützskelett (8) oder ein bewegliches Stützgelenk miteinander verbunden sind.

4. Strukturelement (1) nach Anspruch 3, **dadurch gekennzeichnet, dass** sich das Stützskelett (8) oder Stützgelenk durch den Raum (6) mit den Teilchen (5) erstreckt.

5. Strukturelement (1) nach mindestens einem der vorhergehenden Ansprüche, **dadurch gekennzeichnet, dass** sich der Querschnitt des Raums (6) überall zwischen den beiden Schnittstellen (2, 3) in allen seinen Richtungen über mehrere Teilchen (5) erstreckt.

6. Strukturelement (1) nach mindestens einem der vorhergehenden Ansprüche, **dadurch gekennzeichnet, dass** der Raum (6), in dem die Teilchen (5) angeordnet sind, evakuierbar ist.

7. Strukturelement (1) nach mindestens einem der vorhergehenden Ansprüche, **dadurch gekennzeichnet, dass** für den Druck in dem Raum (6), in dem die Teilchen (5) angeordnet sind, eine Begrenzungs- oder Regeleinrichtung vorgesehen ist.

8. Strukturelement (1) nach mindestens einem der vorhergehenden Ansprüche, **dadurch gekennzeichnet, dass** die Hülle (4) elastisch verformbar ist.

9. Strukturelement (1) nach Anspruch 8, **dadurch gekennzeichnet, dass** die Hülle (4) eine hohe Dehnungssteifigkeit in Umfangsrichtung aufweist.

10. Strukturelement (1) nach Anspruch 9, **dadurch gekennzeichnet, dass** der Raum (6), in dem die Teilchen (5) angeordnet sind, expandierbar ist.

11. Strukturelement (1) nach mindestens einem der vorhergehenden Ansprüche, **dadurch gekennzeichnet, dass** die Hülle (4) aktiv ansteuerbare Komponenten aufweist.

12. Strukturelement (1) nach mindestens einem der vorhergehenden Ansprüche, **dadurch gekennzeichnet, dass** die Teilchen (5) druckresistent sind und eine hohe Drucksteifigkeit aufweisen.

13. Strukturelement (1) nach mindestens einem der vorhergehenden Ansprüche, **dadurch gekennzeichnet, dass** die Oberflächen der Teilchen (5) rau und/oder zur Erhöhung ihrer Haftreibung behandelt sind.

14. Strukturelement (1) nach mindestens einem der vorhergehenden Ansprüche, **dadurch gekennzeichnet, dass** mindestens zwei gegeneinander abgegrenzte Räume (6) mit Teilchen (5) in Reihen- oder Parallelschaltung zwischen den beiden Schnittstellen (2, 3) vorgesehen sind.

15. Roboterarm mit einem Strukturelement nach mindestens einem der vorhergehenden Ansprüche.
